# EUROPEAN PATENT APPLICATION

(11) **EP 4 201 732 A1**
(43) Date of publication of application: **28.06.2023**
(21) Application number: 22215307.4
(22) Date of filing: 21.12.2022
(51) Int. Cl.: B60L 50/10, B60L 50/50, B60L 50/61, B60L 53/22, B60L 58/20, H02J 7/14, H02J 7/34

(54) **A PRE-CHARGING DEVICE, A VOLTAGE CONVERTER AND AN ELECTRIFIED VEHICLE**

(30) Priority: 22.12.2021 CN 202111584977
(71) Applicant: Valeo Systèmes de Contrôle Moteur, 95892 Cergy-Pontoise (FR)
(72) Inventor: WU, Mark-Zhiwei, Shanghai, 201201 (CN)
(74) Representative: Valeo Powertrain Systems

(57) **Abstract**

The present disclosure discloses a pre-charging device, which comprises a first pre-charging unit connected to an external power supply and is used to provide first-stage pre-charging for a load, and a second pre-charging unit connected to an internal power supply and comprising a charge pump unit, which is used to convert a received voltage and output a predetermined constant voltage during the process of providing a second pre-charging stage for the load. The present disclosure also discloses a voltage converter and an electrified vehicle.

## Description

### TECHNICAL FIELD

Embodiments of the present disclosure generally relate to a pre-charging device, a voltage converter and an electrified vehicle.

### BACKGROUND OF THE INVENTION

As drive control technology develops, it is playing an ever more important role in fields such as motor control, electrified vehicle control and frequency conversion control. In the field of electrified vehicles, which include, for example, the pure battery electric vehicle (BEV), hybrid electric vehicle (HEV), plug-in hybrid electric vehicle (PHEV), range extended electric vehicle (range extended EV) and fuel cell electric vehicle (FCEV), etc., there is already technology which uses a DC/DC (direct current to direct current) converter in a dual-power-supply network vehicle architecture to perform voltage conversion between a first network and a second network of a vehicle. Generally, the first network is a low-voltage network supplying less than 30 volts (V), for example, 24V, 14V or 12V, while the second network is a high-voltage network supplying more than 30 V, for example, 48V or 60V. The operation of performing voltage conversion specifically comprises connecting the high-voltage side of the DC/DC converter to an iBSG (integrated belt starter generator) in the vehicle, and connecting it to, for example, a 48V or 60V battery via a relay. A capacitor at the high-voltage side needs to be charged to a battery voltage of, for example, 48V or 60V, by means of a pre-charging mechanism of the DC/DC converter; the electrified vehicle then connects the closed relay to the high-voltage side to, for example, a 48V or 60V battery, the battery then supplies power to the iBSG, the iBSG operates in the starter mode, then the iBSG operates in the generator mode, driven by the internal combustion engine, and the electrified vehicle commands the DC/DC converter to run in the buck mode to realise power supply switching.

Therefore, it would be desirable if any improvements on pre-charging mechanism of voltage converters for electrified vehicles to deliver, at the very least, high efficiency, high safety and a simple structure.

### SUMMARY OF THE INVENTION

Aspects and advantages of the invention will be set forth in part in the following description, or may be obvious from the description, or may be learned through practice of the invention.

In accordance with one aspect disclosed herein, a pre-charging device is provided. The pre-charging device comprises a first pre-charging unit connected to an external power supply and is configured for providing a load with a first-stage pre-charging. The pre-charging device further comprises a second pre-charging unit connected to an internal power supply and comprising a charge pumping unit, configured for converting a received voltage and outputting a predetermined constant voltage during the process of providing a second pre-charging stage for the load.

In some embodiments, the second pre-charging unit further comprises a second pre-charging switching device connected to the charge pumping unit and configured for providing a protection mechanism and cooperating with the charge pumping unit to provide the second pre-charging stage.

In some embodiment, the second pre-charging unit further comprises a driver connected to the charge pumping unit and the second pre-charging switching device to provide driving.

In some embodiments, the second pre-charging switching device comprises two power switches connected in a reverse series manner.

In some embodiments, the first pre-charging unit comprises a constant current source and a first pre-charging switching device connected thereto.

In some embodiments, the pre-charging device comprises a two-stage pre-charging mechanism.

In another exemplary aspect, the present disclosure provides a voltage converter for an electrified vehicle, the voltage converter is connected between an external low-voltage source and an external high-voltage source. The voltage converter comprises an internal power supply and a pre-charging device configured to pre-charge a load connected to the external high-voltage source. The pre-charging device comprises a first pre-charging unit, configured to be powered by the external low-voltage source to provide a first pre-charging stage. The pre-charging device further comprises a second pre-charging unit connected to the internal power supply. The second pre-charging unit comprises a charge pumping unit, configured for converting a received voltage and outputting a predetermined constant voltage during the process of a second pre-charging stage.

In some embodiments, the voltage converter further comprises a chopper, connected between the pre-charging device and the load to be pre-charged.

In some embodiments, the voltage converter is a DC/DC converter.

In yet another exemplary aspect, the present disclosure provides an electrified vehicle comprising the pre-charging device or the voltage converter described above.

With reference to the following description, these and other features, aspects and advantages of the present disclosure will become easier to understand. The accompanying drawings incorporated in this specification and constituting a part thereof illustrate embodiments of the present disclosure and are used to explain the principles of the present disclosure together with said description.

### BRIEF DESCRIPTION OF THE DRAWINGS

The complete and enlightening disclosure of the present disclosure, including preferred embodiments thereof, is expounded herein for those skilled in the art. This specification refers to the drawings, in which:
Figure 1 is a schematic structural diagram of a pre-charging device and a voltage converter according to exemplary embodiments of the present disclosure;
Figure 2 is a schematic circuit diagram of a pre-charging device and a voltage converter according to exemplary embodiments of the present disclosure; and
Figure 3 is a schematic circuit diagram of a charge pump according to an exemplary embodiment of the present disclosure.

### DETAILED DESCRIPTION OF THE INVENTION

Specific embodiments of the present disclosure are described in detail below in conjunction with the accompanying drawings. In the following detailed description of these specific embodiments, some well-known functions or structures are not described in detail in this specification to avoid unnecessary details which would affect the disclosure of the present disclosure. Each embodiment is provided for the purpose of explaining the present disclosure, without limiting the present disclosure. In fact, it will be apparent to those skilled in the art that various modifications and variations may be made to the present disclosure without departing from the scope or spirit of the present disclosure. For example, features illustrated or described as part of one embodiment can be used with another embodiment to produce a further embodiment. Therefore, the present disclosure is intended to cover such modifications and variations that fall within the scope of the appended claims and their equivalents.

As used herein, the terms "first", "second" and similar terms are used interchangeably to distinguish one element from another, rather than being intended to denote the position or importance of each element. As used herein, the terms "a", "an", "the" and "said" are intended to indicate the presence of one or more elements, unless otherwise clearly stated in the context. The terms "include", "comprise", and "have" are intended to be inclusive and mean that there may be other elements in addition to the element listed. The terms "connection" or "connected" and similar terms are not limited to a physical or mechanical connection, and may include an electrical connection, whether direct or indirect.

Although the present disclosure makes various references to certain modules in the system according to the embodiments of the present disclosure, any number of different modules may be used and run on user terminals and/or servers. The modules are purely illustrative, and different modules may be used in different aspects of the system and the method.

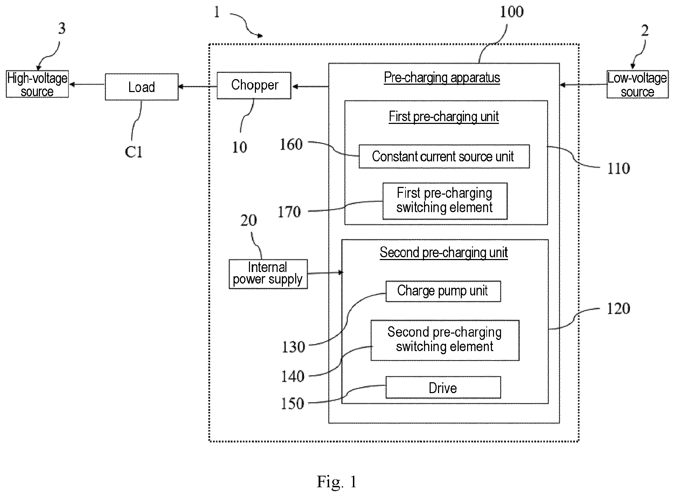

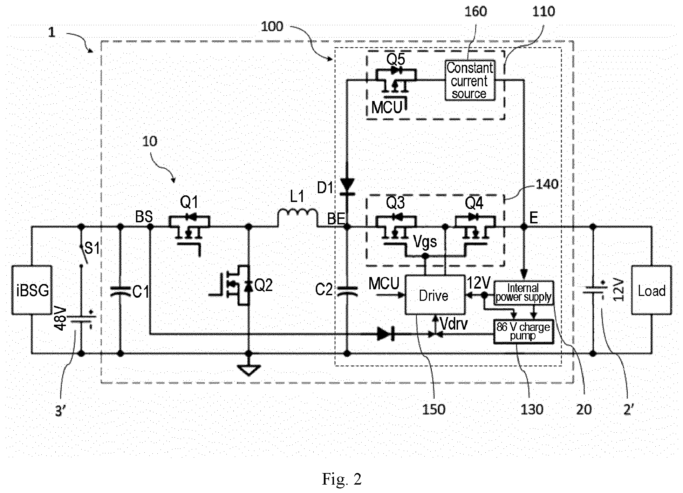

Reference is now made to the drawings, wherein the same numeral in each drawing represents the same element. Figures 1 and 2 are respectively a schematic structural diagram and a schematic circuit diagram of a pre-charging device and a voltage converter of exemplary embodiments of the present disclosure. In the embodiment shown in Figure 1, the voltage converter 1 may be implemented in an electrified vehicle equipped with a dual-voltage power supply network. A first on-board network may comprise a low-voltage source 2 of, for example, 12V, and a second on-board network may comprise a high-voltage source 3 of, for example, 48V. In the embodiment shown, the voltage converter 1 may comprise a pre-charging device 100, which is configured to pre-charge a load C1 connected to the high-voltage source 3. The voltage converter 1 further comprises a chopper 10, which may be connected between the pre-charging device 100 and the load C1 to be pre-charged.

Still referring to Figure 1, the pre-charging device 100 may comprise a two-stage pre-charging mechanism and may, specifically, comprise a first pre-charging unit 110 and a second pre-charging unit 120. In the figures, the first pre-charging unit 110 is configured to be powered by the external low-voltage source 2 to provide a first pre-charging stage. The first pre-charging unit 110 may comprise a constant current source unit 160 and a first pre-charging switching device 170 connected thereto, thereby providing a constant pre-charging current to the load C1 so that the load C1 is charged to a target voltage value of, for example, 12V in the first pre-charging stage. The second pre-charging unit 120 is connected to the internal power supply 20, and comprises a charge pumping unit 130, which is configured for converting a received voltage and outputting a predetermined constant voltage during the process of the second pre-charging stage, so that the load C1 is quickly charged from the current voltage value of, for example, 12V at the end of the first pre-charging stage to a target voltage value of, for example, 48V or 60V in the second pre-charging stage. The second pre-charging unit 120 may further comprise a driver 150, which is connected to the charge pumping unit 130 and the second pre-charging switching device 140, to provide a driving signal voltage value no lower than the voltage value of the charge pump unit 130, so that the second pre-charging switching device 140 can fully conduct the current. The second pre-charging switching device 140 may comprise two power switches connected in a reverse series manner, which can provide a safety mechanism for the pre-charging device 100 to prevent damage to the apparatus due to over-current, over-voltage, under-voltage, etc.

Reference to Figure 2, showing a schematic circuit diagram of the voltage converter 1 in an embodiment of the present disclosure. In the illustrated embodiment, the voltage converter 1 is provided between two power supply networks of a vehicle, wherein the first on-board network may comprise a 12V network of a first DC voltage source 2', a 12V battery, for example, the second on-board network is a 48V network of a second DC voltage source 3', a 48V battery, for example, and the first and the second DC voltage sources 2' and 3' have the same electrical ground as a reference.

Still referring to Figure 2, the voltage converter 1 comprises an input terminal E, an output terminal BS, a control device (not shown), a chopper 10, a pre-charging device 100 and an internal power supply 20. Thus, the voltage converter 1 is connected to the first on-board network via the input terminal E and to the second on-board network via the output terminal BS, i.e., the voltage converter 1 is connected to the first DC voltage source 2' via the first on-board network. The second on-board network comprises a load that needs to be pre-charged, which may be a first capacitor C1. The second on-board network may further comprise a switch S1 in the form of a MOSFET transistor, for example. When the switch S1 is closed, the second DC voltage source 3' supplies power to the second on-board network. In the illustrated embodiment, the switches Q1, Q2, Q3, Q4 and Q5 include but are not limited to MOSFETs, insulated gate bipolar transistors (IGBTs), integrated gate commutated thyristors (IGCTs), injection enhanced gate transistors (IEGTs), silicon carbide metal oxide semiconductor field effect transistors (SiC MOSFETs), or other controllable electric switches capable of switching in ON and OFF states. In the embodiment shown, these switches may be MOSFETs, each having a drain electrode, a source electrode and a gate forming a control terminal. The voltage converter 1 controls the ON or OFF of these transistors by applying a control signal to the gates of these transistors.

The chopper 10 comprises an input terminal BE, an output terminal BS (i.e., the output terminal of the voltage converter 1), an inductor L1, and first and second chopper switches Q1 and Q2. In the figure, the inductor L1 is connected to the input terminal BE via one terminal thereof and is connected to the source electrode of the first chopping switch Q1 and the drain electrode of the second chopping switch Q2 via another terminal thereof. Further, the drain electrode of the first chopping switch Q1 is connected to the output terminal BS, and the source electrode of the second chopping switch Q2 is connected to the output terminal BS. The output terminal BS of the chopper 10 is connected to the second on-board network, thereby connecting the first capacitor C1 to the output terminal BS via one terminal thereof.

The pre-charging device 100 charges the first capacitor C1 from the first DC voltage source 2' through the chopper 10 and specifically provides a constant pre-charging current to the initially discharged first capacitor C1 when the switch S1 is closed.

The pre-charging device 100 comprises a first pre-charging unit 110, and the first pre-charging unit 110 may further comprise a constant current source unit 160 and a first pre-charging switch Q5. When the first pre-charging switch Q5 is in the ON state and the other switches, for example, the chopper switches Q1 and Q2 and the second pre-charging switches Q3 and Q4 are in the OFF state, the constant current source unit 160 can provide the first capacitor C1 with constant first-stage pre-charging from the first DC voltage source 2', so that the first capacitor C1 is pre-charged to a voltage value equal to that of the first DC voltage source 2', for example, 12V. At this point, the charging current of the first stage of pre-charging flows through the first pre-charging switch Q5, the diode D1, the chopper inductor L1, and the body diode of the first chopper switch Q1. As shown in Figure 2, the pre-charging device 100 may comprise a second capacitor C2. During the first stage of pre-charging, the second capacitor C2 is continuously charged to prevent surge current caused by a sudden voltage drop.

In some embodiments, the control signal given to the first pre-charging switch Q5 to control its OFF or ON may come from a controller. The controller may be any type of programmable device, such as a controller, a micro control unit (MCU), a digital signal processor (DSP), etc.

Still referring to Figure 2, the pre-charging device 100 further comprises an internal power supply 20 and a second pre-charging unit, and the second pre-charging unit comprises a charge pump unit 130, a second pre-charging switching device 140 and a driver 150.

The internal power supply 20 is connected to the driver 150, thereby providing the driver 150 with a constant voltage value of 12V, for example, to power it so that the driver 150 can realise its driving function. The driver 150 may further provide a driving signal voltage value Vdrv for the second pre-charge switching element 140.

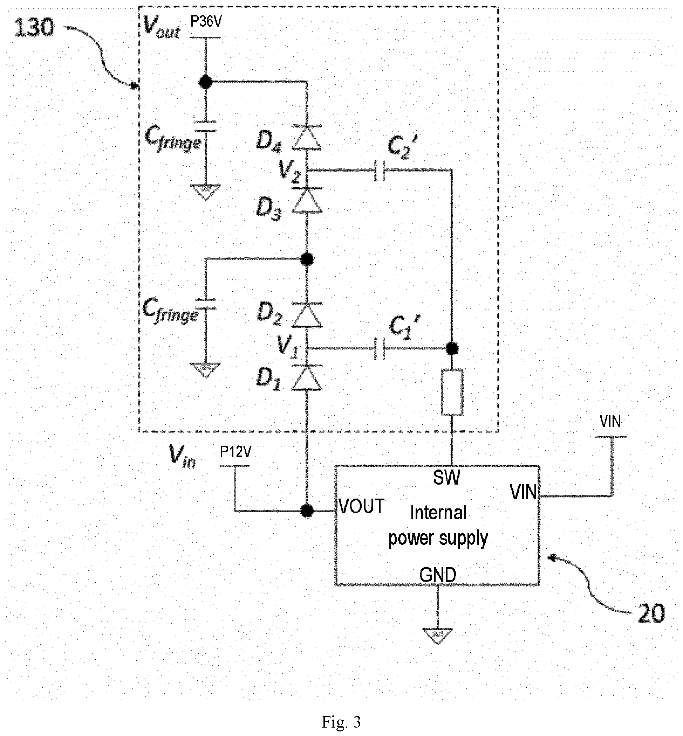

The internal power supply 20 is also connected to the charge pumping unit 130. The charge pumping unit 130 may be regarded as another high-voltage source independent of the second DC voltage source 3'. The charge pumping unit 130 may be a non-inductive voltage converter, which uses capacitors as the energy storage elements, thereby providing a voltage value of 36V, for example. Reference to Figure 3, showing a schematic circuit diagram of the charge pumping unit 130. The internal power supply 20 can provide power for the charge pumping unit 130, thereby providing an input voltage Vin of 12V, for example. As shown in Figure 3, the charge pumping unit 130 may specifically be a multi-stage Dickson charge pump, the input voltage Vin passes through the diodes D1, D2, D3 and D4 in a predetermined manner and controls the charging and discharging of the capacitors C I' and C2', so that the input voltage Vin is multiplied by 3, thereby obtaining an output voltage Vout of 36V. Thus, the driving signal voltage value Vdrv of the driver 150 is either equal to the voltage value of 48V, for example, from the second DC voltage source 3', or equal to the output voltage Vout of 36V, for example, from the charge pumping unit 130.

In some embodiments, the control signal given to the driver 150 may come from a controller. The controller may be any type of programmable device, such as a controller, a micro control unit (MCU), a digital signal processor (DSP), etc.

The second pre-charging switching device 140 may specifically comprise two common-source MOSFETs, i.e., two MOSFETs Q3 and Q4 reversely connected in series. In some embodiments, these two pre-charging MOSFETs Q3 and Q4 may be large-package MOSFETs. The driver 150 and the charge pump unit 130 connected thereto keep the control voltage Vgs between the gate of one of the two second pre-charging MOSFETs and the source electrode of the other pre-charging MOSFET constant and substantially equal to the threshold voltage value, so that the two second pre-charging MOSFETs Q3 and Q4 can be completely closed and also have good thermal conductivity to prevent the risk of damaging the pre-charging MOSFETs.

The second pre-charging switching device 140 further comprises a first terminal E and a second terminal BE. When the MOSFETs Q3 and Q4 are in the OFF state, no current flows between the first terminal E and the second terminal BE. In the second stage of pre-charging, the first pre-charging switch Q5 will be controlled to be in the OFF state, and the second pre-charging MOSFETs Q3 and Q4 will be controlled to be in the ON state, when the first and second capacitors C1 and C2, the chopper switches Q1 and Q2 and the chopper inductor L1 will operate in the boost mode. In this stage, since the two second pre-charging MOSFETs Q3 and Q4 are large-package MOSFETs, the voltage value on the high-voltage side can be quickly charged to a predetermined voltage value of 48V, for example.

According to the specific embodiments of the present disclosure, an electrified vehicle comprising the pre-charging device or the voltage converter described above is also provided.

This specification discloses the present disclosure by using embodiments, including preferred embodiments, and also enables those skilled in the art to implement the present disclosure, including making and using any apparatus or system and performing any incorporated method. The patentable scope of the present disclosure is defined by the claims and may include other embodiments conceived by those skilled in the art. Such other examples shall be within the scope of the claims if they include structural elements that do not differ from the literal language of the claims, or if they include equivalent structural elements with no substantial differences from the literal language of the claims.

## Claims

1. A pre-charging device (100), comprising:
a first pre-charging unit (110), connected to an external low-voltage source (2), configured for providing a load (C1) with a first pre-charging stage; and
a second pre-charging unit (120), connected to an internal power supply (20), comprising a charge pumping unit (130) configured for converting a received voltage and outputting a predetermined constant voltage during a second pre-charging stage provided for the load (C1).

2. The pre-charging device according to claim 1, **characterised in that**
the second pre-charging unit (120) comprises:
a second pre-charging switching device (140), connected to the charge pumping unit (130) configured for providing a protection mechanism and cooperating with the charge pumping unit (130) so as to provide the second pre-charging stage.

3. The pre-charging device according to claim 2, **characterised in that**
the second pre-charging unit (120) further comprises:
a driver (150), connected to the charge pumping unit (130) and the second pre-charging switching device, configured for providing with driving.

4. The pre-charging device according to claim 2, **characterised in that**
the second pre-charging switching device comprises two power switches (Q3, Q4) connected in a reverse series manner.

5. The pre-charging device according to claim 1, **characterised in that**
the first pre-charging unit (110) comprises a constant current source (160) and a first pre-charging switching device (170) connected thereto.

6. The pre-charging device according to claim 1, **characterised in that**
the pre-charging device (100) comprises a two-stage pre-charging mechanism.

7. A voltage converter (1) for an electrified vehicle, connected between an external low-voltage source (2) and an external high-voltage source (3), and the voltage converter (1) comprising:
an internal power supply (20); and
a pre-charging device (100), configured for pre-charging a load (C1) connected to the external high-voltage source (3), the pre-charging device (100) comprising:
a first pre-charging unit (110), configured for providing with a first per-charging stage through the power supplied by the external low-voltage source (2); and
a second pre-charging unit (120), connected to the internal power supply (20), comprising a charge pumping unit (130)configured for converting a received voltage and outputting a predetermined constant voltage during the process of a second pre-charging stage.

8. The voltage converter according to claim 7, **characterised in that**
the second pre-charging unit (120) comprises:
a second pre-charging switching device (140), connected to the charge pumping unit (130) and configured for providing a protection mechanism and cooperating with the charge pumping unit (130) to provide the second pre-charging stage.

9. The voltage converter according to claim 8, **characterised in that**
the second pre-charging unit (120) further comprises:
a driver (150), connected to the charge pumping unit (130) and the second pre-charging switching device, configured for providing with driving.

10. The voltage converter according to claim 8, **characterised in that**
the second pre-charging switching device comprises two power switches connected in a reverse series manner.

11. The voltage converter according to claim 7, **characterised in that**
the first pre-charging unit (110) comprises a constant current source (160) and a first pre-charging switching device (170) connected thereto.

12. The voltage converter according to claim 7, **characterised in that**
the pre-charging device (100) comprises a two-stage pre-charging mechanism.

13. The voltage converter according to claim 7, **characterised in that** it further comprises:
a chopper (10), connected between the pre-charging device (100) and the load (C1) to be pre-charged.

14. An electrified vehicle, comprising the pre-charging device according to any of claims 1 to 6, or the voltage converter according to any of claims 7 to 13.
